# EUROPEAN PATENT APPLICATION

(11) **EP 2 889 709 A2**
(43) Date of publication of application: **01.07.2015**
(21) Application number: 14200230.2
(22) Date of filing: 23.12.2014
(51) Int. Cl.: G05B 19/042

(54) **Industrial Automation Device with Editor and Graphical Object Mobile Visualization**

(30) Priority: 31.12.2013 US 201361922499 P; 11.12.2014 US 201414567088
(71) Applicant: Rockwell Automation Technologies, Inc., Mayfield Heights, OH 44124 (US)
(72) Inventor: Chouinard, Julien, Magog, Québec J1X 5R9 (CA); Trang, Chan-Dara, Brossard, Québec J4W3K4 (CA); Demers, Henri, Brossard, Québec J4Z 3V6 (CA)
(74) Representative: Grünecker Patent- und Rechtsanwälte PartG mbB

(57) **Abstract**

A remote visualization editing and monitoring system facilitates development, management, and deployment of graphical web pages that can be stored on industrial devices (e.g., industrial controllers, drives, etc.) and remotely accessed by mobile devices using a web browser. The remote visualization editing and monitoring system can leverage web technologies to provide simple but powerful graphical web-based HMIs that can be accessed using a client device. The system allows a user to develop and deploy both web-based human-machine interfaces for monitoring of an industrial process, as well as web pages that render graphical representations of the control program executing on the industrial device.

## Description

### CROSS-REFERENCE TO RELATED APPLICATIONS

This application claims priority to U.S. Provisional Application Serial No. 61/922,499, filed on December 31, 2013, entitled "INDUSTRIAL AUTOMATION DEVICE WITH EDITOR AND GRAPHICAL OBJECT MOBILE VISUALIZATION," the entirety of which is incorporated herein by reference.

### BACKGROUND

This disclosure relates generally to remote visualization of industrial device data and programming on remote mobile devices via the Internet

### BRIEF DESCRIPTION

The following presents a simplified summary in order to provide a basic understanding of some aspects described herein. This summary is not an extensive overview nor is it intended to identify key/critical elements or to delineate the scope of the various aspects described herein. Its sole purpose is to present some concepts in a simplified form as a prelude to the more detailed description that is presented later.

In one or more embodiments, a system for remote visualization of industrial device data is provided, comprising a visualization page generation component configured to generate a web page that displays a graphical representation of an industrial control program and associated industrial device data; and a communication component configured to download the web page and one or more web services to an industrial device.

Also, one or more embodiments provide a method for remotely visualizing an industrial control programming, generating, by a system comprising at least one processor, a web page configured to display a graphical representation of an industrial control program; and sending, by the system, the web page and one or more web services to an industrial device, wherein the one or more web services are configured to deliver the web page to a remote client device in response to a request received at the industrial device.

Also, according to one or more embodiments, a non-transitory computer-readable medium is provided having stored thereon instructions that, in response to execution, cause a system comprising a processor to perform operations, the operations comprising generating, based on analysis of an industrial control program, a web page configured to display a graphical representation of the industrial control program; and installing the web page and one or more web services on an industrial device, wherein the one or more web services are configured to serve the web page to a remote device in response to a request received at the industrial device from the remote device.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of a generalized control environment including an industrial controller and a human-machine interface.
FIG. 2 is a general overview of a system that facilitates remote viewing of industrial status, telemetry, and configuration data associated with an industrial device.
FIG. 3 is a block diagram of an example remote visualization editing system that can facilitate configuration of an industrial device for web-based remote monitoring.
FIG. 4 is a diagram illustrating development and download of web pages to an industrial device using a remote visualization editing system.
FIG. 5 is a diagram illustrating delivery of web pages stored on an industrial device to various types of remote web-capable devices.
FIG. 6 is a diagram of an example embodiment in which the visualization page generation component is an integrated component of a control program development platform.
FIG. 7 is a diagram illustrating delivery of HTML pages to a client device using services and web pages downloaded to an industrial controller.
FIG. 8 is a program development screen of an example development environment for creation of industrial control programs.
FIG. 9 is a web page view of a project tree.
FIG. 10 is a web page view of a ladder logic program.
FIG. 11 is a flowchart of an example methodology for generating a graphical representation of control programming that can be used to remotely view a running industrial control program.
FIG. 12 is a flowchart of an example methodology for delivering a graphical representation of an industrial device's control program via a public network.
FIG. 13 is an example computing environment.
FIG. 14 is an example networking environment.

### DETAILED DESCRIPTION

Various aspects of this disclosure are now described with reference to the drawings, wherein like reference numerals are used to refer to like elements throughout. In the following description, for purposes of explanation, numerous specific details are set forth in order to provide a thorough understanding of one or more aspects. It should be understood, however, that certain aspects of this disclosure may be practiced without these specific details, or with other methods, components, materials, etc. In other instances, well-known structures and devices are shown in block diagram form to facilitate describing one or more aspects.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a hard disk drive, multiple storage drives (of optical or magnetic storage medium) including affixed (e.g., screwed or bolted) or removably affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers.

Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

Industrial controllers and their associated I/O devices are central to the operation of modern automation systems. These controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such platforms.

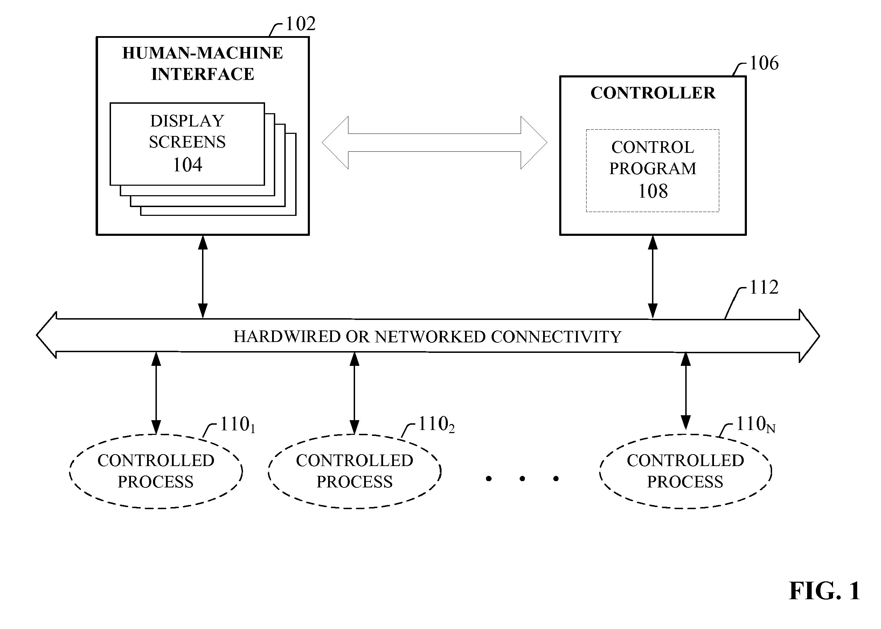

Industrial automation systems often include one or more operator interfaces - also referred to as human-machine interfaces (HMIs) - that allow plant personnel to view telemetry and status data associated with the automation system, and to control some aspects of system operation. FIG. 1 is a block diagram of a generalized control environment including an industrial controller and an HMI. An industrial facility can comprise one or more controlled processes 110₁-110_{N} relating to product manufacture, machining, motion control, batch processing, material handling, or other such industrial functions. Controlled processes 110₁-110_{N} are monitored and controlled by at least one controller 106. Controller 106 can comprise an industrial controller, such as a programmable logic controller (PLC) or other such programmable automation controller (PAC), that executes a control program 108 to facilitate monitoring and control of controlled processes 110₁-110_{N}. Controller 106 may also comprise a soft controller executed on a personal computer or other hardware platform. Control program 108 can comprise any conceivable type of code used to process input signals read into the controller 106 and to control output signals from the controller, including but not limited to ladder logic, sequential function charts, function block diagrams, or structured text. Data read into or generated by controller 106 can be stored in a data table within controller memory, which can comprise native memory or removable storage media.

Controller 106 may communicatively interface with the industrial devices that make up controlled processes 110₁-110_{N} over hardwired or networked connections 112. For example, controller 106 can be equipped with native hardwired inputs and outputs that communicate with one or more field devices associated with the controlled processes 110₁-110_{N} to effect control of the devices. The native controller I/O can include digital I/O that transmits and receives discrete voltage signals to and from the field devices, or analog I/O that transmits and receives analog voltage or current signals to and from the devices. The controller I/O can communicate with the controller's processor over a backplane such that the digital and analog signals can be read into and controlled by the control programs. Controller 106 can also communicate with field devices over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. It is to be appreciated that controller 106 is not limited to the above specifications, and can include virtually any type of controller used to control an industrial process.

The example system depicted in FIG. 1 also includes at least one human-machine interface 102 (e.g., a human-machine interface, or HMI) communicatively coupled to controller 106 (e.g., via network 112). HMI 102 can exchange data with controller 106 to facilitate visualization of information relating to controlled processes 110₁-110_{N} and to allow an operator to submit data to controller 106 in the form of issued commands (e.g., cycle start commands, device actuation commands, etc.), setpoint values, and the like. HMI 102 can generate one or more display screens 104 through which the operator interacts with the controller 106, and thereby with the controlled processes 110₁-110_{N}. Example display screens can visualize present states of the controlled processes 110₁-110_{N} using graphical representations of the processes that display metered or calculated values, employ color or position animations based on state, render alarm notifications, or employ other such techniques for presenting relevant data to the operator. Data presented in this manner is read from controller 106 by HMI 102 and presented on one or more of the display screens 104 according to display formats chosen by the system developer.

Since HMI 102 requires access to data within the industrial controller 106, and therefore must share a common network 112 with the industrial controller, such operator interface systems must be executed on-site using local computing resources (typically located in proximity to the automation systems being monitored). Consequently, industrial data and statuses can only be viewed by personnel in proximity to the automation system (e.g., on the plant floor). Likewise, viewing and editing of the control program 108 during runtime of the industrial controller 106 typically requires a programmer to locally interface a laptop or other computing device to the controller so that an animated representation of the program - displaying live process values and status information - can be monitored and modified.

To address these and other issues, one or more embodiments of this disclosure provide a remote visualization editing and monitoring system that facilitates development, management, and deployment of graphical web pages that can be stored on industrial devices and remotely accessed by mobile devices using a web browser. The remote visualization editing and monitoring system can leverage web technologies (e.g., JAVA script, scalable vector graphics, hypertext transfer protocol, hypertext markup language, etc.) to provide simple but powerful graphical web-based HMIs that can be accessed using a web client device via a web browser. The system allows a user to develop and deploy both web-based graphical HMIs for monitoring of an industrial process, as well as web pages that render graphical representations of the control program (e.g., ladder logic diagram, sequential function chart, etc.) executing on the industrial controller.

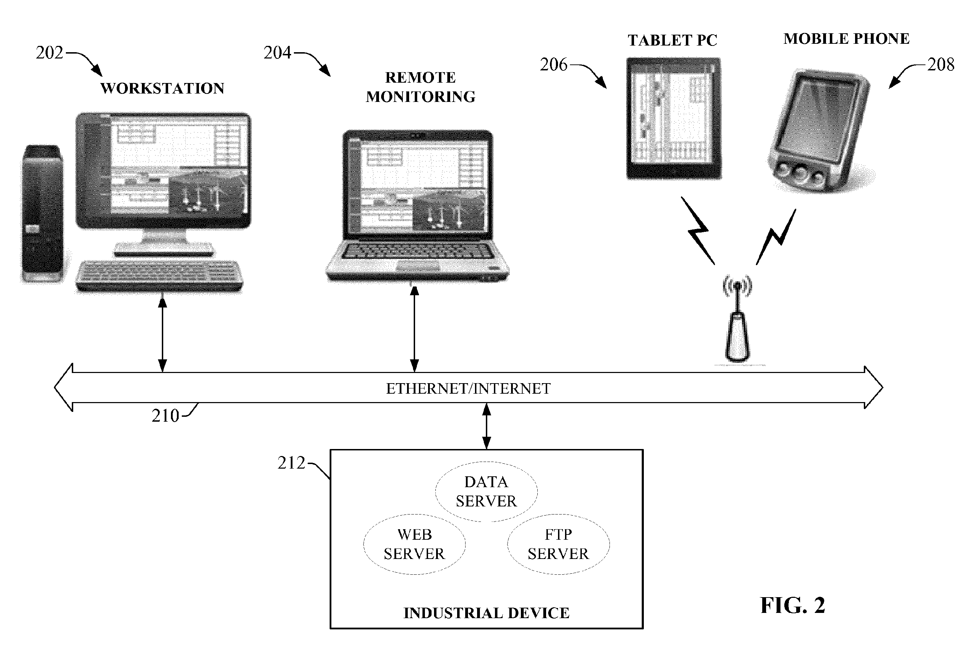

FIG. 2 illustrates a general overview of a system that leverages one or more embodiments of the remote visualization editing and monitoring system to facilitate remote viewing of industrial status, telemetry, and configuration data associated with an industrial device. In this example, industrial device 212 is a component of one or more industrial automation systems deployed at an industrial facility. Example automation systems can include, but are not limited to, batch control systems (e.g., mixing systems), continuous control systems (e.g., PID control systems), or discrete control systems. Industrial device 512 can include such devices as industrial controllers (e.g., programmable logic controllers or other types of programmable automation controllers); motor drives (e.g., a variable frequency drive or other type of motor drive), remote I/O devices, field devices such as sensors and meters; industrial robots, barcode markers and readers; vision system devices (e.g., vision cameras); smart welders; or other such industrial devices.

In an example scenario, industrial device 212 may comprise an industrial controller that facilitates monitoring and control of an industrial process. The controller exchanges data with the field devices using native hardwired I/O or via a plant network such as Ethernet/IP, Data Highway Plus, ControlNet, Devicenet, or the like. A given controller typically receives any combination of digital or analog signals from the field devices indicating a current state of the devices and their associated processes (e.g., temperature, position, part presence or absence, fluid level, etc.), and executes a user-defined control program that performs automated decision-making for the controlled processes based on the received signals. The controller then outputs appropriate digital and/or analog control signaling to the field devices in accordance with the decisions made by the control program. These outputs can include device actuation signals, temperature or position control signals, operational commands to a machining or material handling robot, mixer control signals, motion control signals, and the like. The control program can comprise any suitable type of code used to process input signals read into the controller and to control output signals generated by the controller, including but not limited to ladder logic, sequential function charts, function block diagrams, structured text, or other such platforms.

Industrial device 212 may be provided with pre-installed web services that allow the industrial device to act as an embedded web and data server capable of serving stored web pages to remote devices (both fixed networked devices and mobile devices) on demand. These services can include one or more of a web server, a data server, or a file transfer protocol (FTP) server. In other scenarios, some embodiments of the remote visualization editing system described herein can implement one or more web services on industrial device 212, thereby transforming industrial device 212 to an embedded web and data server. In such embodiments, the remote visualization editing system can install and execute one or more of the web server, data server, or file transfer protocol (FTP) server on the industrial device 212. The remote visualization editing system allows a user to create and download web pages (e.g., hypertext markup language, or HTML, pages) to the industrial device 212, which can be remotely accessed by any suitably authorized remote mobile device over a wired and/or wireless network 210 (e.g., the Internet or a local Ethernet network). The web pages can be delivered to substantially any types of remote devices conforming to a variety of different form factors.

In an example scenario, the remote visualization editing system may be installed and executed on a workstation device 202 (e.g., a desktop computer, a laptop computer, a tablet computer, *etc*.), and can configure industrial device 212 with web-based remote monitoring capabilities. Initially, workstation device 202 can communicate with industrial device 212 via a local connection (e.g., USB, RS-232, or the like), or remotely over a networked connection. A developer can create a control program to be downloaded to the industrial device, and the remote visualization editing system can generate one or more web pages (e.g., HTML pages) for visualizing the program based on an analysis of the developed program. The editing system can then download the developed pages to industrial device 212. In some embodiments, the editing system may also download any of the web, data, or FTP services required by the industrial device 212 to serve the web pages to remote devices for remote monitoring, if such services are not already installed on the industrial device. The editing system includes tools that allow web page graphics to be linked to data registers of the industrial device 212, so that real-time device data can be monitored via the web pages. As will be described in more detail below, the web pages can be designed to visualize industrial device programming - such as ladder logic, sequential function charts, function block diagrams, or the like - to allow remote runtime monitoring of the industrial control program running on industrial device 212 via a mobile device such as a mobile phone, tablet computer, or other such device.

Once the web pages (and, optionally, the web, data, and/or FTP services) have been downloaded to industrial device 212, the industrial device 212 is capable of remotely visualizing device data to a variety of devices. For example, a laptop computer 204 can access industrial device 212 over the Internet to facilitate remote monitoring of the device's real-time data and/or programming. Likewise, smaller mobile devices, such as table computer 206 or mobile phone 208, can remotely access the web pages stored on industrial device 212 so that programming and data can be viewed from any location having Internet access.

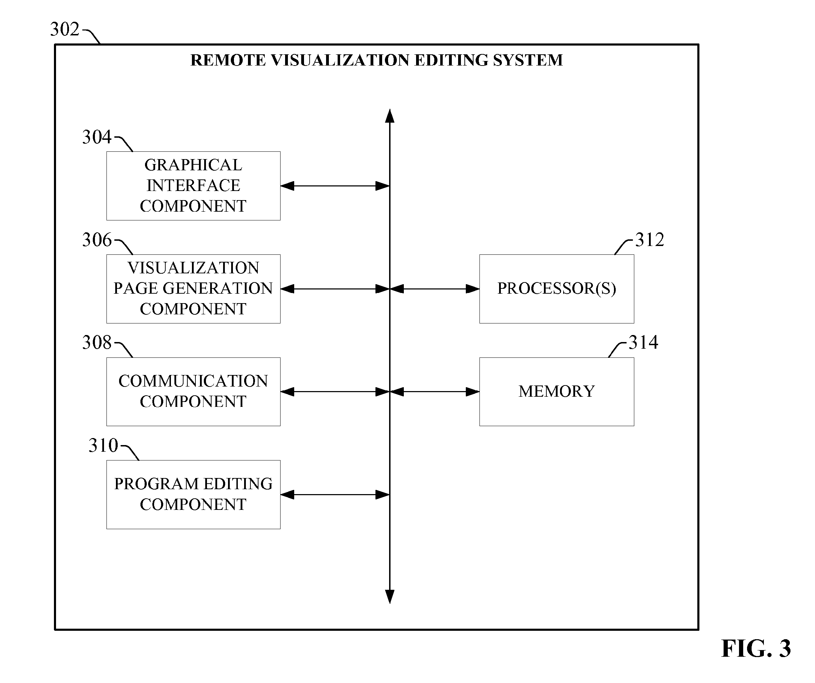

FIG. 3 is a block diagram of an example remote visualization editing system that facilitates configuration of an industrial device for web-based remote monitoring. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

One or more embodiments of remote visualization editing system 302 can include a graphical interface component 304, a visualization page generation component 306, a communication component 308, an optional program editing component 310, one or more processors 312, and memory 314. In various embodiments, one or more of the components 304-310, the one or more processors 312, and memory 314 can be electrically and/or communicatively coupled to one another to perform one or more of the functions of the remote visualization editing system 302. In some embodiments, components 304-310 can comprise software instructions stored on memory 314 and executed by processor(s) 312. The remote visualization editing system 302 may also interact with other hardware and/or software components not depicted in FIG. 3. For example, processor(s) 312 may interact with one or more external user interface devices, such as a keyboard, a mouse, a display monitor, a touchscreen, or other such interface devices.

Graphical interface component 304 can be configured to receive user input and to render output to the user in any suitable format (e.g., visual, audio, tactile, etc.). User input can be, for example, control program configuration input, web page configuration input, user responses to prompts provided by the graphical interface component 304, or other such input data. Visualization page generation component 306 can be configured to create web pages based on configuration input received from a user via graphical interface component 304. This can include, for example, converting an industrial control program (e.g., a ladder logic program or other type of control program) to a web page for remote display. Visualization page generation component 306 can leverage any suitable web technology for development of web pages, including but not limited to HTTP 1.1, HTTPS, HTML5 (W2C), JavaScript, scalable vector graphics (SVG) and Canvass, JQuery library, web socket, or other such technologies.

Communication component 308 can be configured to communicatively interface with an industrial device and exchange data between the device and the editing system 302. Communication between the editing system and the industrial device can be via a local communication link such as USB, RS-232, or the like, or via a remote connection over a network or the Internet.

Program editing component 310 configured to create industrial control programming in accordance with programming input received from the user (e.g., via graphical interface component 304) and download the programming to the industrial device (e.g., an industrial controller) for execution. For example, visualization page generation component 306 may be bundled, and run in parallel, with an industrial control program development environment so that control programming and web pages for the industrial device can be developed using a common development platform. Visualization page generation component 306 may also comprise a modular software element that can be installed as a plug-in within an existing control program development environment.

The one or more processors 312 can perform one or more of the functions described herein with reference to the systems and/or methods disclosed. Memory 314 can be a computer-readable storage medium storing computer-executable instructions and/or information for performing the functions described herein with reference to the systems and/or methods disclosed.

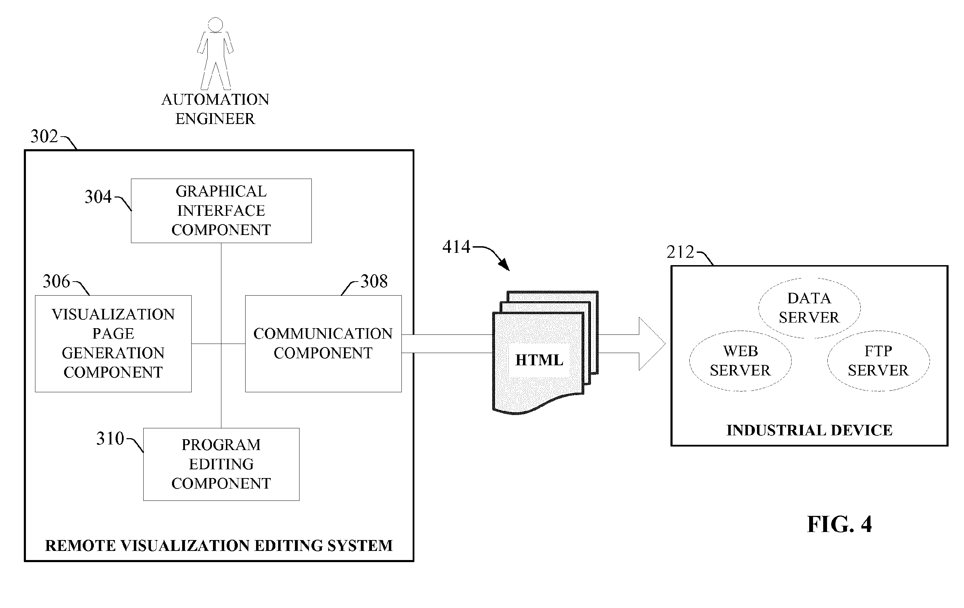

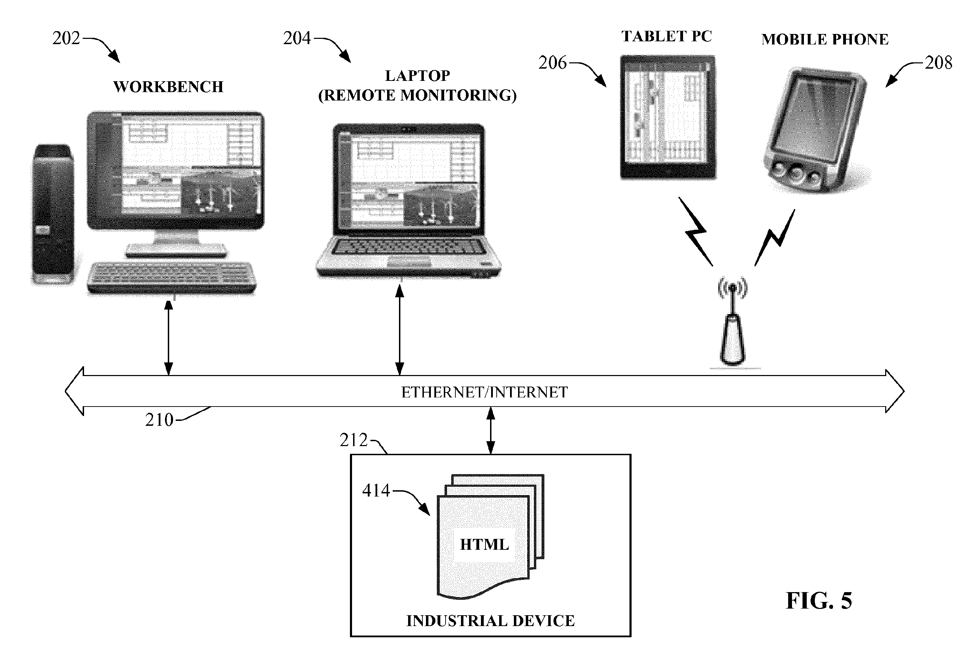

FIG. 4 illustrates development and download of web pages to an industrial device using the remote visualization editing system described herein. The remote visualization editing system 302 can generate web pages (e.g., HTML5 pages) based on industrial control programming developed by an automation engineer. For example, the visualization page generation component 306 can parse and analyze an industrial control program (e.g., a ladder logic program, sequential function chart program, a structured text program, etc.) developed by the automation engineer using a program editing component 310, and generate the web pages configured to visualize the control program in a web-based format. The generated web pages 414 can then be downloaded to industrial device 212 via communication component 308. As illustrated in FIG. 5, once web pages 414 have been downloaded to industrial device 212, any web client device can remotely connect to industrial device 212 via any web browser, retrieve any of the downloaded web pages 414 and visualize the pages on the web client device. Using the configuration data and web pages provided by remote visualization editing system 302, the industrial device can serve pages to substantially any type of remote web client device, including but not limited to a desktop computer, a tablet computer, or a smart phone.

As noted above, one or more embodiments of visualization page generation component 306 can be bundled with, or reside in a module plug-in component of, a program editing component 310. This configuration allows a user to develop an industrial control program for an industrial device as well as web pages for remote visualization of the industrial device's data and programming using a common development platform. In such embodiments, the visualization page generation component 306 can run in parallel with the program development environment of the program editing component 310 and allow the user to build graphical pages for remote monitoring and commissioning purposes.

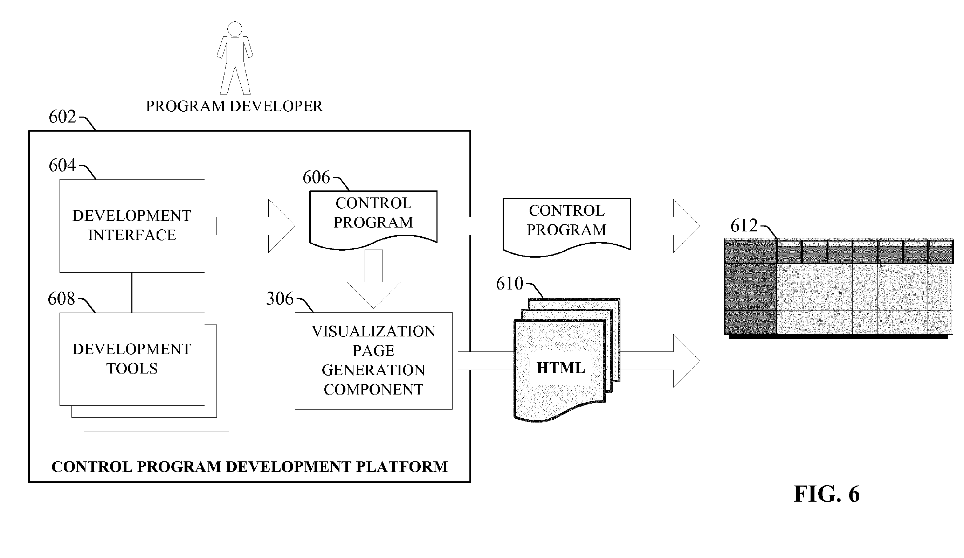

As noted above, one or more embodiments of visualization page generation component 306 can include support for remote visualization of industrial control programming (e.g., ladder logic diagrams, sequential function charts, function block diagrams, *etc.*). In this regard, the editing system 302 can configure the industrial device 212 to generate web pages (e.g., HTML pages) that render the device's ladder logic diagrams, sequential function charts, or other such programming using lightweight graphical elements, such as scalable vector graphics (SVG). For embodiments in which the visualization page generation component 306 is a bundled component or modular plug-in component of a program development environment, the editing system can generate all or portions of such web pages automatically based on the industrial control program configuration developed by the user within the program development platform. FIG. 6 is a diagram of an example embodiment in which the visualization page generation component 306 is an integrated component of a control program development platform 602. In this example, a program developer interacts with a development interface 604 of the development platform 602 to develop a control program 606 (e.g., a ladder logic program, a sequential function chart program, structured text, etc.) to be downloaded and executed on industrial controller 612. To this end, the development interface 604 allows the developer to access a number of development tools 608 made available by the development platform to create the control program 606 and to define the I/O for the industrial controller 612. These development tools 608 can include, for example, a program instruction library, routine builders, compilers, debugging tools, and other such tools.

Once the developer has completed development of the control program 606 to be downloaded to industrial controller 612, the visualization page generation component 306 can parse the control program 606 to identify the program routines, control instructions, data tags, and other aspects of the program. Based on information about the control program generated through parsing of the program, the visualization page generation component 306 automatically generates one or more web pages 610 that contain a graphical representation of the control program including graphical elements linked to appropriate data registers for display of real-time data values or status animations on the web-based representation. In one or more embodiments, web pages 610 can be build using SVG graphics, JAVA scripts, HTML code, or other web-based scripts. The developer can then download the web pages 610 together with the control program 606 to the industrial controller 612. The development platform 602 can also download any of the web, data, or FTP services required by the industrial controller 612 to serve the web pages and any necessary control data to remote devices for remote monitoring.

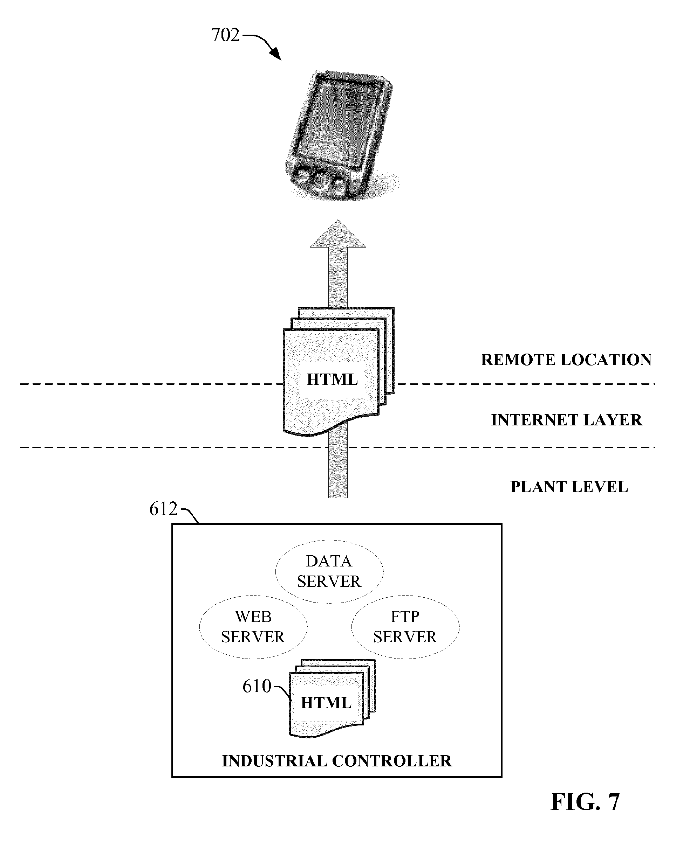

Once downloaded to the industrial controller 612, the pages can be remotely accessed by any remote device (e.g., a mobile phone, a tablet computer, a desktop computer, etc.) via a web browser. FIG. 7 is a diagram illustrating delivery of the web-based graphical representations to a remote device 702 via the web pages 610 downloaded to the industrial controller 612. Web services installed on the industrial controller 612 (either pre-installed on the controller or installed by the visualization system) allow the controller to act as a web server in addition to performing its industrial control functions. To facilitate delivery of the web pages via an Internet layer, the industrial controller may be placed on a plant network with secured access to the Internet (e.g., via a firewall device). A user of remote device 702 can access the store web pages by directing a web browser running on the remote device to a network address (e.g., an internet protocol address) associated with the industrial controller. This address can be assigned to the controller via the development platform 602 or using another network configuration tool. When the pages are accessed by a remote device 702, an animated representation of the industrial control program executing on the industrial controller 612 (e.g., a ladder logic diagram, a sequential function chart, sequential text, etc.) is displayed on the remote device via the device's web browser. The web page is automatically scaled to conform to the form factor of the remote device 702. This can include scaling the aspect ratio to fit the dimensions of the client device's display screen, repositioning graphical elements on the screen as needed to fit the screen size, etc.

The data services installed on the industrial controller 612 retrieve selected real-time data items from the industrial controller's data registers and push the retrieved data to the client device for display on the web page. The data retrieved by the data services is determined by the data tags defined in the web pages, and may comprise, for example, digital controller data items that drive the on/off statuses of the rung elements of a ladder logic program, analog process variables used as operators in a control instruction, etc. The data services push these data values to the client device via the Internet layer, such that display objects and animations on the web pages are driven by this live data. The controller data can be displayed on the web page in the form of overlaid numeric data values, text strings, color animation of ladder logic rungs or instruction blocks, etc.

If a control program running on industrial controller 612 is subsequently modified using the development platform 602 (either by editing the program offline and re-downloading or by making on-line edits while the controller is running), the visualization page generation component 306 can replace or revise the web pages used to visualize the control programming accordingly, ensuring that the stored graphical representation accurately reflects the control program currently running on the controller. In some embodiments, a template web page for rendering a controller's programming can be stored on the industrial controller in an empty state, and can be configured to read the currently running control program each time the web page is remotely accessed. The web page (or associated services) can translate the currently running logic program to a light-weight graphical format (e.g., using SVG graphics, JAVA script, etc.) and serve the resulting web page to the remote device.

Although the examples described above depict the visualization page generation functionality as being an integrated component of a control program development platform (FIGs. 6 and 7) or as a dedicated remote visualization editing system 302 (FIG. 4), the visualization page generation component may be an integrated component of the industrial device itself in some embodiments. In such embodiments, the industrial device (e.g., industrial controller, motor drive, I/O module, etc.) may be provided with visualization page generation functionality, as well as the web, data, and FTP services, already installed. With this configuration, the designer can develop and download a control program to the industrial controller using a standard development platform, and the visualization page generation component executing on the industrial controller will parse the resulting program files on the industrial controller itself. Based on this analysis of the program files, the visualization page generation component will generate and store the necessary web pages on a dedicated storage area of the industrial controller to be served to client devices on demand.

Also, it is to be appreciated that one or more embodiments of the visualization page generation component can generate web pages for other types of industrial devices, including but not limited variable frequency drives or other types of motor drives, I/O modules, vision systems, telemetry devices, barcode markers and readers, etc.

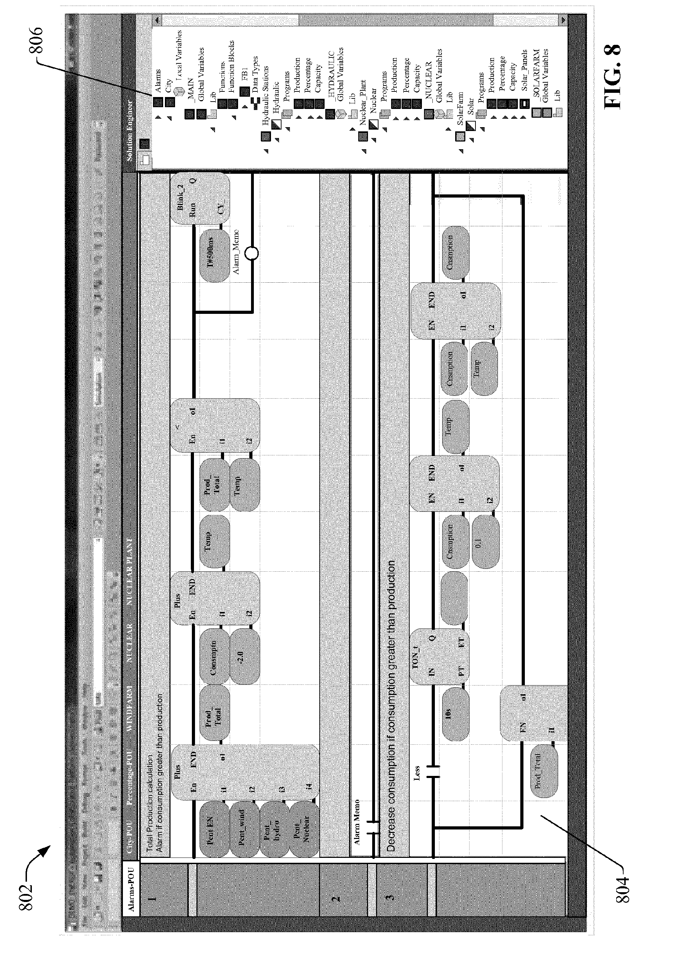

Using the techniques described above, the remote visualization editing system can translate a set of control instructions on an industrial controller into a light-weight graphical format that can be embedded into a web page (e.g., HTML) and served to remote mobile devices. In some embodiments, the remote visualization editing system can also include a project tree associated with the control program to yield a project view of the control project that can be remotely viewed and manipulated. For example, FIG. 8 is a program development screen of an example development environment 802 generated by program editing component 310. This corresponds to the view presented on the developer's workstation while developing an industrial control project to be downloaded for execution on an industrial controller. The development environment 802 includes a programming window 804 that serves as a development space on which the user builds one or more ladder logic programs for execution on the controller. Development environment 802 also includes a project tree window 806 that displays a hierarchical tree view of the various areas, systems, devices, programs, variables, and other elements comprising the control project.

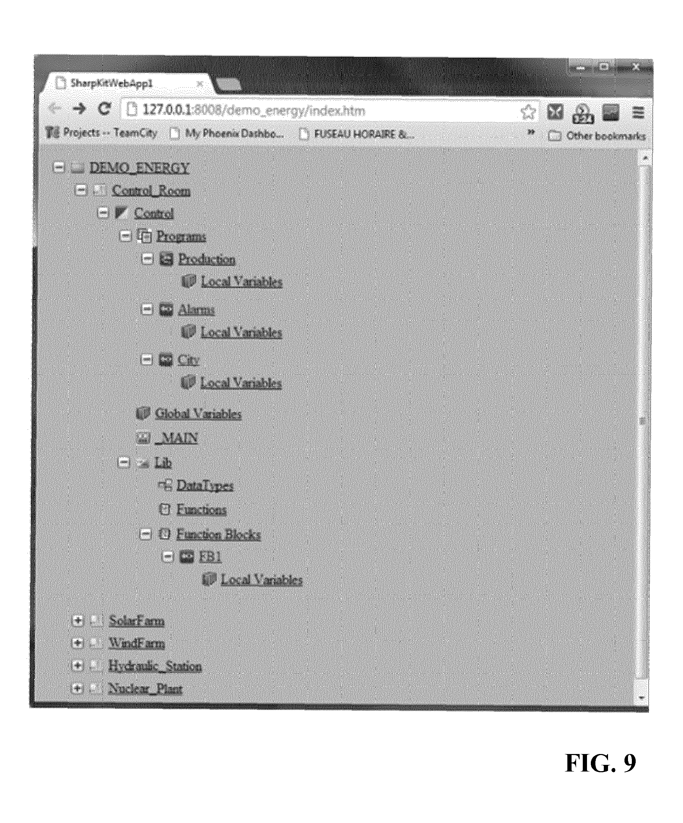

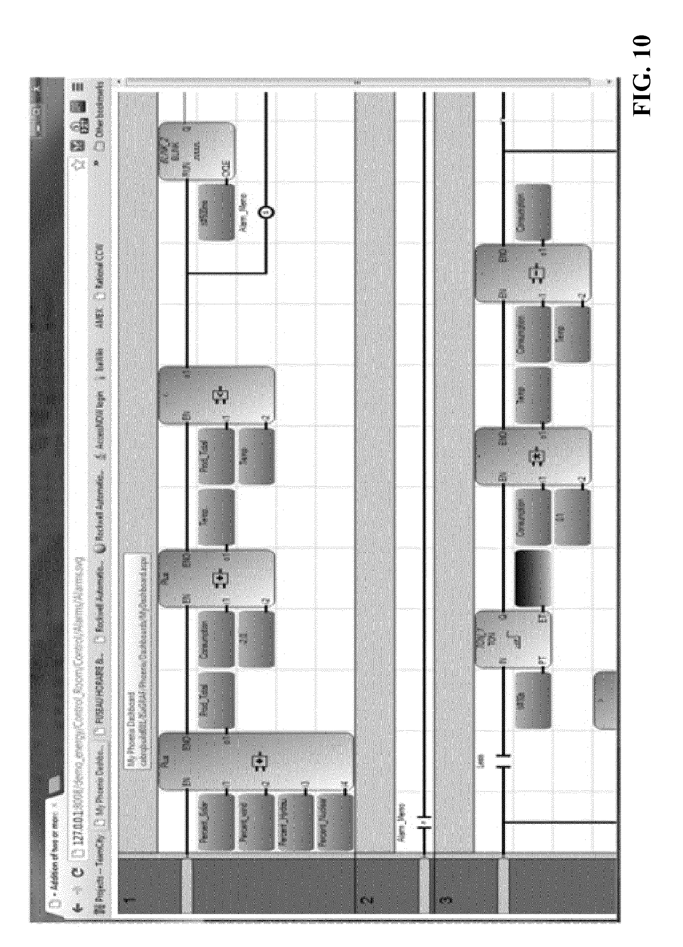

In order to reproduce this development view on a remote mobile device, embodiments of the remote visualization editing system can translate this project into web-based graphical views of both the ladder logic and the project tree. Using the techniques described above, pages corresponding to these views can be stored on the industrial controller when the project configuration is downloaded. Remote mobile client devices can then remotely access these pages via their respective browsers. FIG. 9 illustrates a web page view of the project tree (representing project tree window 806), while FIG. 10 illustrates a web page view of the ladder logic (representing programming window 804). In this way, the development view of the project running on an industrial controller can be reproduced in a light-weight graphical from on an Internet-capable mobile device (e.g., a tablet computer, a smart phone, *etc*.)

In some embodiments, the web pages can be configured to allow users to write data to the industrial device from their remote device via interaction with the web pages. This can include, for example, changing of setpoint values, modification of the control program via the development view, or other such modifications. For example, the user may interact with the project tree representation of FIG. 9 to remotely browse the running project to view various programs, subroutines, and variable values executing on the controller. Using the project tree view, the user can then invoke a selected program in the programming window view of FIG. 10. If the web page was invoked with write privileges, the user may modify selected portions of the invoked program (e.g., modify, add, or delete a rung; change an operator of a program instruction block, etc.) through interaction with this programming window view. The web pages can also include predefined objects that allow the user to remotely write selected data to the industrial device via the web page, including but not limited to ellipses, input boxes, combo boxes, etc.

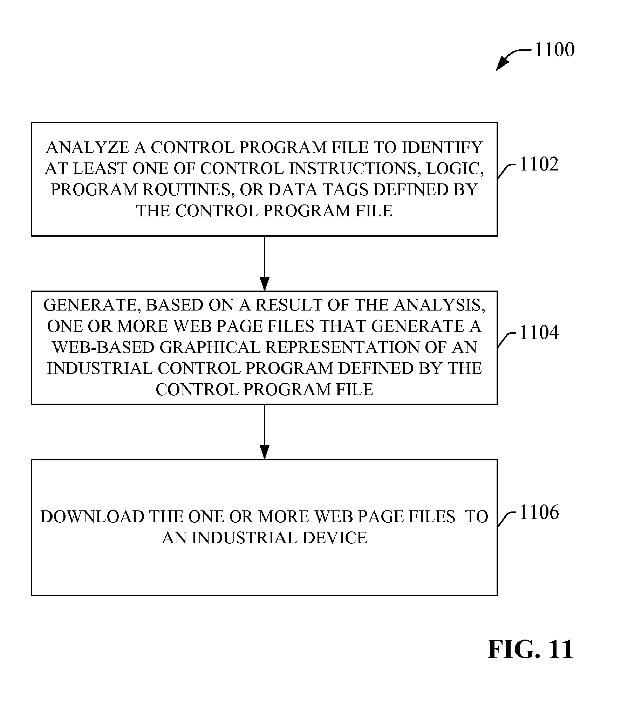

FIGs 11-12 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 11 illustrates an example methodology 1100 for generating a graphical representation of control programming that can be used to remotely view a running industrial control program. Initially, at 1102, a control program file is analyzed (e.g., parsed) to identify at least one of control instructions, logic, program routines, or data tags defined by the control program file. This analysis can be performed, for example, by a remote visualization editing system that receives and analyzes the program from a program development platform. The remote visualization editing system may comprise a separate system relative to the development platform, or may be an integrated component of the development platform that allows the graphical representation to be generated in parallel with creation of the control program.

At 1104, one or more web page files are generated based on a result of the analysis. The web page files are configured to generate a web-based graphical representation of the industrial control program defined by the control program file. In some embodiments, the web page files may be constructed using any suitable web scripts, including but not limited to HTML, JAVA script, SVG, or other such web scripting languages.

At 1106, the one or more web page files are downloaded to an industrial device for execution. Data, web, and/or FTP services installed on the industrial device allow the industrial device to act as a web server capable of delivering the web pages to a remote client device over a network (e.g., a public network such as the Internet, a local network or intranet, a near field communication network, etc.). The services also allow the industrial device to deliver near real-time data from the industrial device's memory to the remote client device, so that the web-based graphical representation invoked on the client device will be populated with live data generated by the industrial device (e.g., live telemetry or process variable data read or generated by the industrial device and stored in the industrial device's data table).

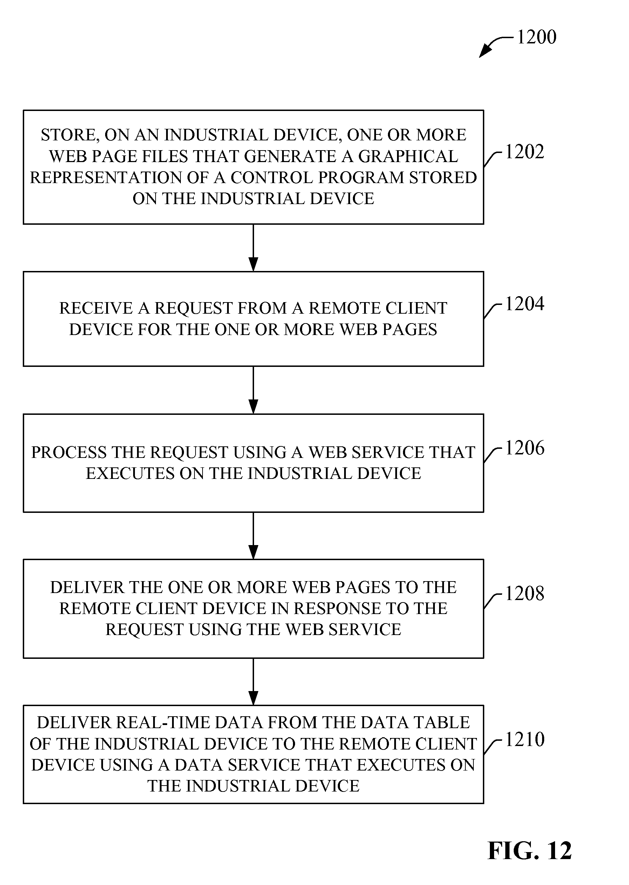

FIG. 12 illustrates an example methodology 1200 for delivering a graphical representation of an industrial device's control program via a local or public network. Initially, at 1202, one or more web page files are stored on an industrial device (e.g., an industrial controller, a motor drive, an I/O module, etc.). The one or more web page files are configured to, when invoked by a client device, generate a graphical representation of a control program stored and executed on the industrial device.

At 1204, a request for the one or more web pages is received from a remote client. The request may be received at the industrial device via a public network (e.g., the Internet), or via a local or near-field network. At 1206, the request is processed using a web service that executes on the industrial device. At 1208, the one or more web pages are delivered to the remote client device in response to the request using the web service. At 1210, real-time data from the data table of the industrial device is delivered to the remote client device using a data service that executes on the industrial device. The data service selects the data items to be delivered to the client based on data links defined in the web pages that specify which data registers or tags correspond to the various display animations rendered on the graphical representation. The graphical representation generated by the web pages may comprise, for example, a ladder logic view of the control program, a sequential function chart, a function block diagram, structured text, a hierarchical project tree, or other such representation of the control program.

Embodiments, systems, and components described herein, as well as industrial control systems and industrial automation environments in which various aspects set forth in the subject specification can be carried out, can include computer or network components such as servers, clients, programmable logic controllers (PLCs), communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC as used herein can include functionality that can be shared across multiple components, systems, and/or networks. As an example, one or more PLCs can communicate and cooperate with various network devices across the network. This can include substantially any type of control, communications module, computer, Input/Output (I/O) device, sensor, actuator, and human machine interface (HMI) that communicate via the network, which includes control, automation, and/or public networks. The PLC can also communicate to and control various other devices such as I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

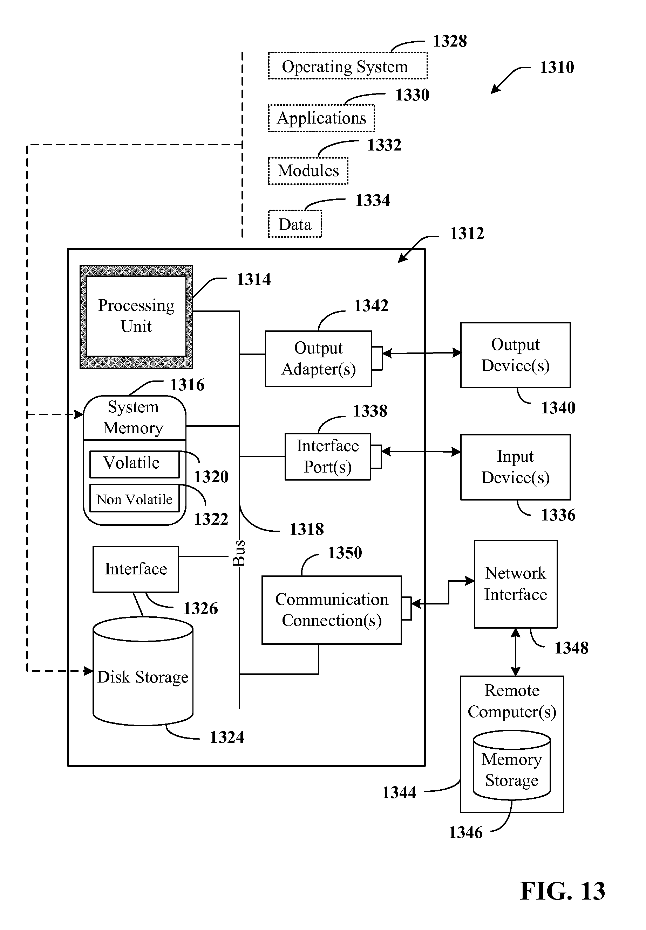

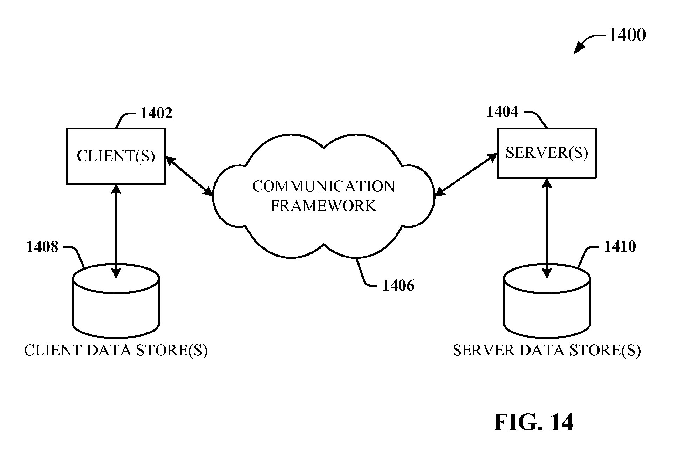

In order to provide a context for the various aspects of the disclosed subject matter, FIGs. 13 and 14 as well as the following discussion are intended to provide a brief, general description of a suitable environment in which the various aspects of the disclosed subject matter may be implemented.

With reference to FIG. 13, an example environment 1310 for implementing various aspects of the aforementioned subject matter includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Dual microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable PROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1312 also includes removable/non-removable, volatile/nonvolatile computer storage media. FIG. 13 illustrates, for example a disk storage 1324. Disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1324 to the system bus 1318, a removable or non-removable interface is typically used such as interface 1326.

It is to be appreciated that FIG. 13 describes software that acts as an intermediary between users and the basic computer resources described in suitable operating environment 1310. Such software includes an operating system 1328. Operating system 1328, which can be stored on disk storage 1324, acts to control and allocate resources of the computer 1312. System applications 1330 take advantage of the management of resources by operating system 1328 through program modules 1332 and program data 1334 stored either in system memory 1316 or on disk storage 6424. It is to be appreciated that one or more embodiments of the subject disclosure can be implemented with various operating systems or combinations of operating systems.

A user enters commands or information into the computer 1312 through input device(s) 1336. Input devices 1336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1314 through the system bus 1318 via interface port(s) 1338. Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312, and to output information from computer 1312 to an output device 1340. Output adapters 1342 are provided to illustrate that there are some output devices 1340 like monitors, speakers, and printers, among other output devices 1340, which require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected via communication connection 1350. Network interface 1348 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the system bus 1318. While communication connection 1350 is shown for illustrative clarity inside computer 1312, it can also be external to computer 1312. The hardware/software necessary for connection to the network interface 1348 includes, for exemplary purposes only, internal and external technologies such as, modems including regular telephone grade modems, cable modems and DSL modems, ISDN adapters, and Ethernet cards.

FIG. 14 is a schematic block diagram of a sample-computing environment 1400 with which the disclosed subject matter can interact. The sample-computing environment 1400 includes one or more client(s) 1402. The client(s) 1402 can be hardware and/or software (e.g., threads, processes, computing devices). The sample-computing environment 1400 also includes one or more server(s) 1404. The server(s) 1404 can also be hardware and/or software (e.g., threads, processes, computing devices). The servers 1404 can house threads to perform transformations by employing one or more embodiments as described herein, for example. One possible communication between a client 1402 and servers 1404 can be in the form of a data packet adapted to be transmitted between two or more computer processes. The sample-computing environment 1400 includes a communication framework 1406 that can be employed to facilitate communications between the client(s) 1402 and the server(s) 1404. The client(s) 1402 are operably connected to one or more client data store(s) 1408 that can be employed to store information local to the client(s) 1402. Similarly, the server(s) 1404 are operably connected to one or more server data store(s) 1410 that can be employed to store information local to the servers 1404.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

### The following is a list of further preferred embodiments of the invention:

Embodiment 1. A system for remote visualization of industrial device data, comprising:
   a visualization page generation component configured to generate one or more web pages that display a graphical representation of an industrial control program and associated industrial device data; and
   a communication component configured to download the one or more web pages to an industrial device.
Embodiment 2. The system of embodiment 1, wherein the visualization page generation component is further configured to perform an analysis on the industrial control program and convert the industrial control program to a graphical format based on a result of the analysis to yield the graphical representation.
Embodiment 3. The system of embodiment 2, wherein the visualization page generation component is further configured to embed the graphical representation in the one or more web pages.
Embodiment 4. The system of embodiment 1, wherein the visualization page generation component comprises a modular plug-in for a program development platform.
Embodiment 5. The system of embodiment 2, wherein the graphical representation comprises at least one of a ladder logic diagram, a function block diagram, a sequential function chart, or a structured text representation.
Embodiment 6. The system of embodiment 1, wherein the one or more web services are configured to execute on the industrial device to facilitate delivery of the one or more web pages and the industrial device data to a remote device via at least one of a public network, a local network, or a near-field communication network.
Embodiment 7. The system of embodiment 6, wherein the graphical representation comprises an interactive graphical representation that facilitates at least one of reading data from the industrial device, writing data to the industrial device, or debugging of the industrial control program via the remote device.
Embodiment 8. The system of embodiment 1, wherein the one or more web pages are configured to control a state representation of at least one graphical element of the graphical representation based on industrial data generated by the industrial device.
Embodiment 9. The system of embodiment 1, wherein the web page is configured to be rendered on any of a remote desktop computer, a remote tablet computer, or a remote mobile phone.
Embodiment 10. The system of embodiment 1, wherein the industrial device is one of an industrial controller, a motor drive, an I/O device, an industrial telemetry device, an industrial robot, or a vision system.
Embodiment 11. A method for remotely visualizing an industrial control programming, comprising:
   generating, by a system comprising at least one processor, one or more web pages configured to display a graphical representation of an industrial control program; and
   sending, by the system, the one or more web pages to an industrial device.
Embodiment 12. The method of embodiment 11, wherein the generating comprises:
   performing an analysis on the industrial control program;
   converting the industrial control program to a graphical format based on a result of the analysis to yield the graphical representation; and
   embedding the graphical representation in the one or more web pages.
Embodiment 13. The method of embodiment 11, wherein the generating comprises generating the one or more web pages to render the graphical representation of the industrial control program as at least one of a ladder logic diagram, a function block diagram, a sequential function chart, or a structured text representation.
Embodiment 14. The method of embodiment 11, wherein the generating comprises generating the one or more web pages to include at least one graphical object having an animated state controlled by a data item stored on the industrial device's local memory.
Embodiment 15. The method of embodiment 11, wherein the sending the one or more web pages comprises sending over at least one of a public network, a local network, or a near-field communication network.
Embodiment 16. The method of embodiment 15, wherein the generating the one or more web pages comprises configuring the one or more web pages to render the graphical representation of the industrial control program as an interactive representation configured to receive editing input via the remote client device that facilitates editing of the industrial control program.
Embodiment 17. The method of embodiment 11, wherein the generating comprises configuring the one or more web pages to be scalable based on the remote client device.
Embodiment 18. The method of embodiment 1, wherein the sending comprises sending the one or more web pages to at least one of an industrial controller, a motor drive, an I/O device, an industrial telemetry device, an industrial robot, or a vision system.
Embodiment 19. A non-transitory computer-readable medium having stored thereon instructions that, in response to execution, cause a device comprising a processor to perform operations, the operations comprising:
   generating, based on analysis of an industrial control program, one or more web pages configured to display a graphical representation of the industrial control program; and
   installing the one or more web pages on an industrial device.
Embodiment 20. The non-transitory computer-readable medium of embodiment 19, wherein the one or more web pages are configured to render, as the graphical representation, at least one of a ladder logic diagram, a function block diagram, a sequential function chart, or a structured text representation.

## Claims

1. A system for remote visualization of industrial device data, comprising:
a visualization page generation component configured to generate one or more web pages that display a graphical representation of an industrial control program and associated industrial device data; and
a communication component configured to download the one or more web pages to an industrial device.

2. The system of claim 1, wherein the visualization page generation component is further configured to perform an analysis on the industrial control program and convert the industrial control program to a graphical format based on a result of the analysis to yield the graphical representation, and the visualization page generation component is further configured to embed the graphical representation in the one or more web pages.

3. The system of claim 1, wherein the visualization page generation component comprises a modular plug-in for a program development platform, and the graphical representation comprises at least one of a ladder logic diagram, a function block diagram, a sequential function chart, or a structured text representation.

4. The system of claim 1, wherein the one or more web services are configured to execute on the industrial device to facilitate delivery of the one or more web pages and the industrial device data to a remote device via at least one of a public network, a local network, or a near-field communication network, and the graphical representation comprises an interactive graphical representation that facilitates at least one of reading data from the industrial device, writing data to the industrial device, or debugging of the industrial control program via the remote device.

5. The system of one of claims 1 to 4, wherein the one or more web pages are configured to control a state representation of at least one graphical element of the graphical representation based on industrial data generated by the industrial device.

6. The system of one of claims 1 to 5, wherein the web page is configured to be rendered on any of a remote desktop computer, a remote tablet computer, or a remote mobile phone.

7. The system of one of claims 1 to 6, wherein the industrial device is one of an industrial controller, a motor drive, an I/O device, an industrial telemetry device, an industrial robot, or a vision system.

8. A method for remotely visualizing an industrial control programming, comprising:
generating, by a system comprising at least one processor, one or more web pages configured to display a graphical representation of an industrial control program; and
sending, by the system, the one or more web pages to an industrial device.

9. The method of claim 8, wherein the generating comprises:
performing an analysis on the industrial control program;
converting the industrial control program to a graphical format based on a result of the analysis to yield the graphical representation; and
embedding the graphical representation in the one or more web pages.

10. The method of claim 8, wherein the generating comprises:
generating the one or more web pages to render the graphical representation of the industrial control program as at least one of a ladder logic diagram, a function block diagram, a sequential function chart, or a structured text representation; and/or
generating the one or more web pages to include at least one graphical object having an animated state controlled by a data item stored on the industrial device's local memory.

11. The method of claim 8, wherein the sending the one or more web pages comprises sending over at least one of a public network, a local network, or a near-field communication network, and
the generating the one or more web pages comprises configuring the one or more web pages to render the graphical representation of the industrial control program as an interactive representation configured to receive editing input via the remote client device that facilitates editing of the industrial control program.

12. The method of one of claims 8 to 11, wherein the generating comprises configuring the one or more web pages to be scalable based on the remote client device.

13. The method of one of claims 8 to 12, wherein the sending comprises sending the one or more web pages to at least one of an industrial controller, a motor drive, an I/O device, an industrial telemetry device, an industrial robot, or a vision system.

14. A non-transitory computer-readable medium having stored thereon instructions that, in response to execution, cause a device comprising a processor to perform operations, the operations comprising:
generating, based on analysis of an industrial control program, one or more web pages configured to display a graphical representation of the industrial control program; and
installing the one or more web pages on an industrial device.

15. The non-transitory computer-readable medium of claim 14, wherein the one or more web pages are configured to render, as the graphical representation, at least one of a ladder logic diagram, a function block diagram, a sequential function chart, or a structured text representation.
